Europäisches Patentamt

**European Patent Office**

Office européen des brevets

(11) Publication number: **0 136 989**
A2

# (12) EUROPEAN PATENT APPLICATION

(21) Application number: **84850260.5**

(22) Date of filing: **07.09.84**

(51) Int. Cl.⁴: **B 60 D 1/00**
**B 60 D 1/04, A 01 B 59/042**

(30) Priority: **19.09.83 SE 8305008**

(43) Date of publication of application:
**10.04.85 Bulletin 85/15**

(84) Designated Contracting States:
**AT BE CH DE FR GB IT LI LU NL SE**

(71) Applicant: **Kählli West Aktiebolag**
**Östra Högvalta**
**S-671 00 Arvika(SE)**

(72) Inventor: **Pihlgren, Ingemar**
**Östra Högvalta**
**S-671 00 Arvika(SE)**

(74) Representative: **Hynell, Magnus**
**Hynell Patenttjänst AB Box 236**
**S-683 02 Hagfors(SE)**

(54) Device in connection with a tractive vehicle.

(57) A draw hook or a corresponding pulling means of a tractor or other tractive vehicle is mounted on a carrier, which is designed to be raised and lowered along a straight line. The straight line extends from an upper end position, determined by a fixed locking organ (6), interacting with the pulling means, locking the eye bar or corresponding element of the trailing unit, to the ground level or immediately thereabove, so that motive organs (12,13) by pressing down a press plate or corresponding element (11) against the ground or against some other firm support may raise the rear wheels of the vehicle off the ground. According to a chosen embodiment the press plate (11) is also the carrier for the draw hook (10).

Fig.1.

Croydon Printing Company Ltd.

# DEVICE IN CONNECTION WITH A TRACTIVE VEHICLE

## TECHNICAL FIELD

The invention concerns a device in connection with a tractive vehicle equipped with a tow hook, a draw pin, or some corresponding pulling means. More specifically, the invention concerns an assembly in connection with the carrier for the pulling means, comprising inter alia motive organs for this carrier. The invention includes inter alia the use of these motive organs not only to connect or disconnect a trailer or some other pulled unit but also to lift the rear wheels in connection with wheel changing or change of chains.

## BACKGROUND ART

It is well known and conventional to use the draft links or a tractor to raise or lower a draw hook on a carrier when connecting or disconnecting for example an eye bar. These known devices have certain disadvantages and limitations. The draw hook of these devices for example moves arcuately downward-forward when lowered, the tractor rear blocking it from the driver's field of vision. This of course makes it more difficult for the driver to direct the hook correctly in relation to the eyelet. Normally, the driver will need an assistant, directing this operation, or will have to get off the tractor once or several times to check the position. Another drawback of these devices is that they block the use of the draft links of the tractor, prohibiting the use of these for carrying auxiliary equipment while the draw hook is being connected to the eye bar.

Another known practice is to equip tractive vehicles with hydraulic cylinders to raise the vehicle from the ground. It is for example standard practice to equip such tractors and other vehicles as are intended especially for digging with such hydraulic cylinders. These known devices have this sole purpose, however, and cannot be used to assist for example a draw hook.

0136989

DISCLOSURE OF INVENTION

The purpose of the invention is to eliminate the disadvantages and limitations enumerated above. In particular, it is intended to make it possible for the driver to observe and predict the position of the draw hook during its entire movement, which will facilitate the entry of the draw hook or some corresponding pulling means into a draw bar eyelet or the like.

Another object of the invention is provide a device, which may be mounted on ordinary tractors, which are equipped with traditional draft links. In particular, an object of the invention is to provide a device for maneuvering the pulling means without having to involve the links, which makes it possible to use the links for other purposes, such as holding or handling auxiliary equipment, while simultaneously connecting or disconnecting a trailing vehicle.

Another purpose of the invention is to provide a device which may also be used to raise the rear wheels of the tractive vehicle off the ground. Particularly, the motive organs for the draw hook are designed with the purpose of making possible the use of the same motive organs together with a carrier for the pulling means for this lifting movement also. According to the invention, the pulling means is mounted on a carrier, motive organs being arranged to be able to raise and lower the carrier with the pulling means along a straight line. This line, according to one aspect of the invention, extends from an upper end position, which is determined by a stationary locking device which interacts with the pulling means and locks the eye bar or corresponding element of the trailing vehicle, down to and past a level which may be below the level of the ground, so that said motive organs by pressing down a press plate or the like against the ground or some other firm support may lift the rear wheels of the vehicle off the ground. It is suitable to let the straight line slope from said upper end position downward-rearward at an angle of between $3^{\circ}$ and $20^{\circ}$, preferably between $5^{\circ}$ and $15^{\circ}$, and suitably at about $10^{\circ}$ from the vertical plane.

Said press plate preferably constitutes said carrier, the pulling means extending upward from the top side of the plate, preferably from a point close to the rear edge of the.plate. The bottom side of the plate is horizontal irrespective of the position of the plate along its line of movement and has a comparatively large surface to distribute the surface pressure, making it possible by pressing the plate against the ground or against some support to raise the rear wheels from the ground. The fact that the bottom side of the plate is horizontal naturally does not exclude the possibility of it being profiled to prevent gliding on the ground.

In the preferred embodiment the motive organs comprise two assemblies of hydraulic equipment. The carrier for the pulling means is mounted between these two assemblies, each of which comprises both a hydraulic cylinder and a hydraulic piston with a piston rod. Of these parts, a first part is fixed to a mounting on the vehicle, and another part, which is mobile with respect to the first part, is attached to said carrier. More specifically, it is suitable to let the piston and piston rod constitute that part which is connected to the mounting on the vehicle, while the cylinder which is mobile relative to this stationary part is attached to the carrier for the pulling means. It is suitable to let the hydraulic cylinder be double-acting, and the piston rod provided with channels, which open into the hydraulic chambers on each side of the piston. Further, it is suitable that each piston rod is connected to the mounting by a capped casing, coaxial with the hydraulic cylinder, said casing both guiding the mobile cylinder and bracing the hydraulic assembly.

Further characteristics and advantages of the invention will be apparent from the attached claims and the following description of a preferred embodiment.

BRIEF DESCRIPTION OF DRAWINGS

In the following description of a preferred embodiment reference will be made to the attached drawings, of which

Fig. 1    is a perspective view of the device according to the
          invention;

Fig. 2    is a sectional elevation of a hydraulic assembly which
          is part of the device; and

Fig. 3    is a side elevation of the device.

In the drawings only such details are depicted as are important to
the understanding of the principles of the invention, such details
being omitted as belong to conventional technique or are otherwise
without bearing on the principles of the invention, in order to bring
out the significant features.

DESCRIPTION OF PREFERRED EMBODIMENT

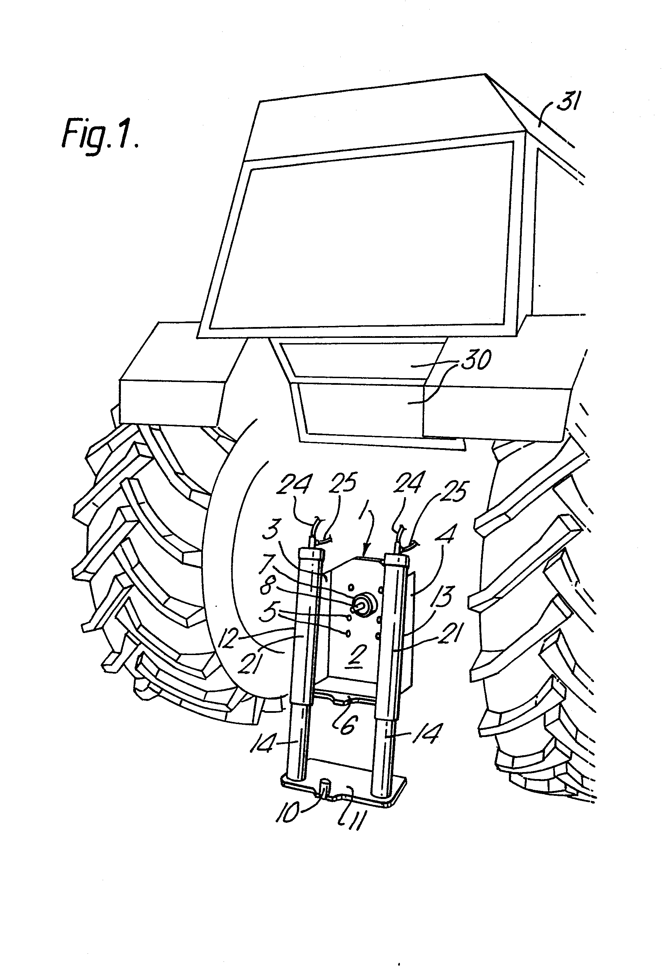

Referring at first to Fig. 1, a mounting located at the rear of a
tractor is designated 1. The mounting in a manner previously known
consists of an anchor plate 2 and two vertical plates or brackets
3 and 4, extending from the anchor plate. The anchor plate is secured to the rear of the tractor by a number of screws 5. Close to
the lower edges of the brackets 3 and 4 is mounted a horizontal
locking plate 6 for an eye bar, said locking plate extending between the brackets 3 and 4. In the anchor plate 2 there is in a
conventional manner a hub 7 for a PTO shaft 8.

A draw hook has been designated 10. It consists of a short bar
which extends upward from the top side of a plate 11 which is the
carrier for the draw hook 10. The plate 11 may be raised and lowered
along a straight line from an upper position, in which the hook 10
abuts against the bottom side of the locking plate 6, down to a
position about 5 cm above the ground. To accomplish these movements upward and downward there are two hydraulic assemblies 12
and 13. The reason for limiting the downward movement to a small
distance above the ground is a desire to minimize the risk of the
plate 11 running into some obstacle if the tractor is moved with
the plate in its lower position. If the tractor is to be lifted,
a support is put under the plate 11.

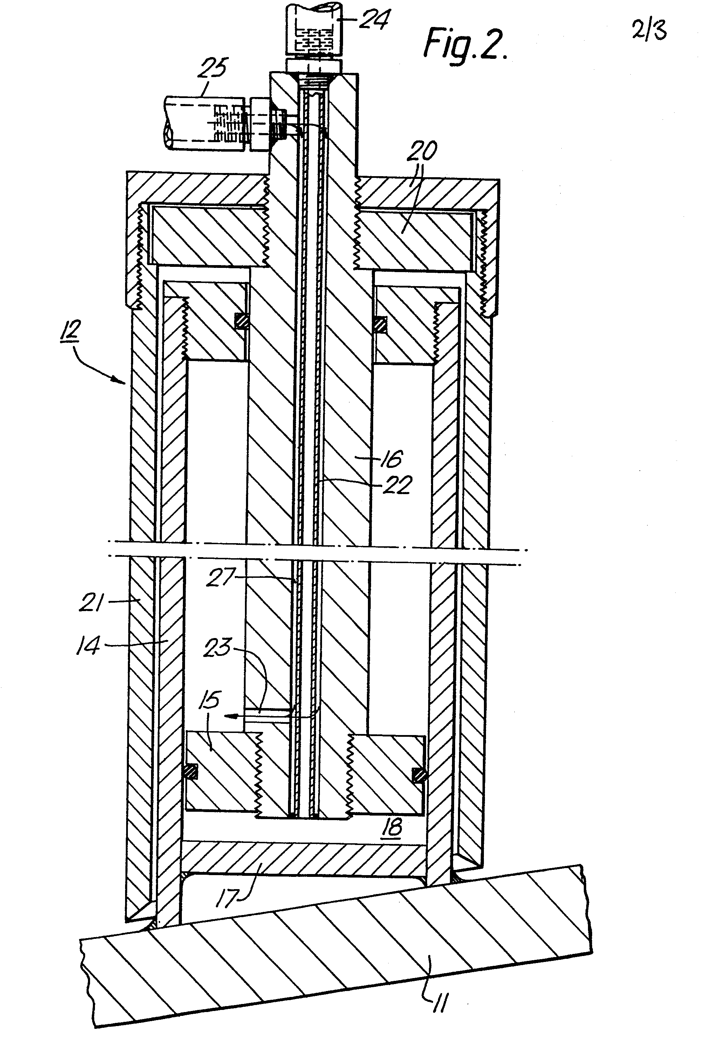

Fig. 2 is a section along the axis of the hydraulic assembly 12. The design of assembly 13 is identical. The assembly comprises a hydraulic cylinder 14, a piston 15, and a piston rod 16. A partition floor 17 is arranged inside the cylinder 14 and delimits a lower hydraulic chamber (plus chamber) 18. An upper chamber is designated 19. The cylinder 14 extends beyond the floor 17 and is welded to the carrier plate 11.

The piston rod 16 is screwed to a double lid 20 on a casing 21, the inner diameter of which is slightly larger than the outer diameter of the cylinder 14. The cylinder 14 may be displaced inside the casing 21, which functions as a guide for the cylinder 14 and as a brace for the entire hydraulic assembly 12.

The piston rod 16 consists of a pipe. Inside this pipe there is another pipe 22. The latter pipe opens into the lower hydraulic chamber 18, while the pipe which constitutes the piston rod 16 forms a channel 27, which communicates with the upper hydraulic chamber 19 via conduit 23. The connection conduits for hydraulic fluid to the chambers 18 and 19 are designated 24 and 25, respectively, and are connected to the extension of piston rod 16 immediately above the lid 20. The casing 21 is welded to the bracket 3 along its entire length.

The arrangement described has the advantage of obviating hydraulic conduits to the lower parts of the hydraulic assemblies, which would impair seriously the functioning of the device. Further, the device becomes very stable and a high power output is made possible. The strong forces which may be exerted by the pistons 15, putting the cylinders 14 in motion, are transferred to the plate 11, so that the plate 11 may be used not only to raise and lower the draw hook 10, but also to press so strongly against a support on the ground that the rear wheels of the vehicle may be lifted. Therefore, the plate 11 is arranged to be horizontal. According to the embodiment, the plate consists of a flat sturdy steel plate. To prevent the plate 11 from sliding on the supporting surface, when the wheels are to be lifted, the bottom side of the plate may be profiled in a suitable way.

In order that the driver may observe the draw hook 10 whatever its vertical position through the rear lower windows 30 of the cab 31, the casings 21 of the hydraulic assemblies 12 and 13 are welded to the brackets 3 and 4 in such a way that each of the centre axes 27 of the hydraulic assemblies slants slightly forward, or in other words in such a way that the assemblies extend downward-rearward. The angle of inclination $a$ to prefer may vary between vehicles, but in a normal case a suitable inclination angle $a$ may be about $10^{\circ}$.

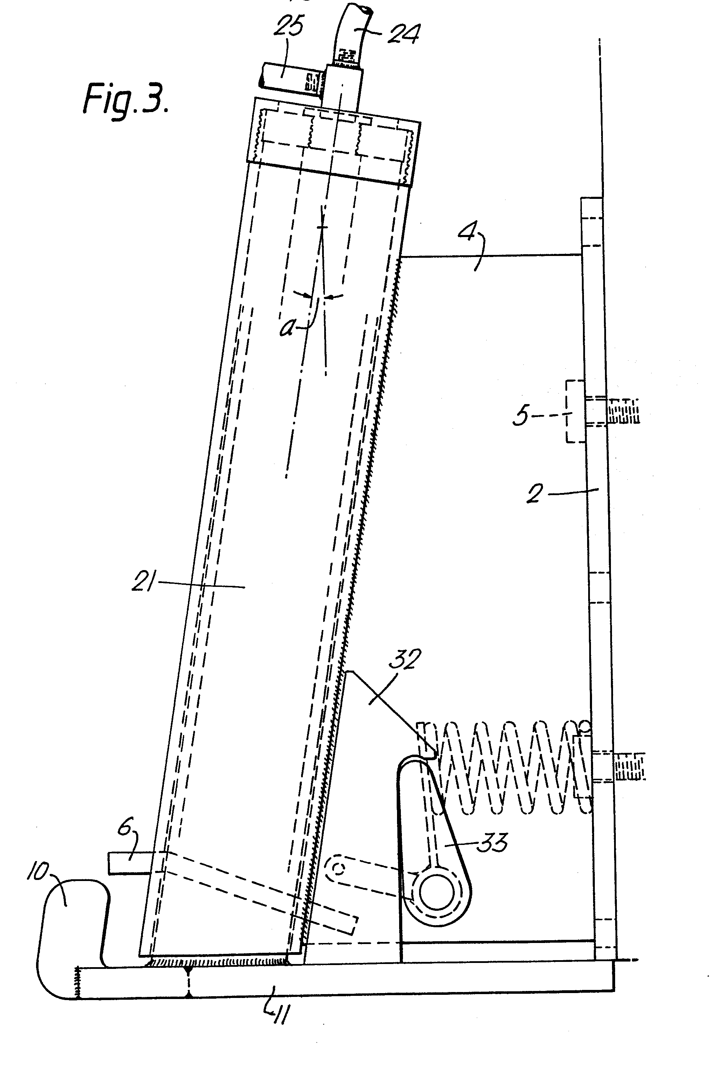

The devices illustrated may also be equipped with organs or details known as such. For example, locking organs in the form of latches 32 and snap locks 33 as depicted in Fig. 3 may be provided, which will automatically lock the plate in its upper position, and which may be released by the driver when the plate is to be lowered again. Other complements or modifications are also feasible within the spirit and scope of the invention.

CLAIMS

1. Device in connection with a tractive vehicle with a draw hook, draw pin, or corresponding pulling means, c h a r a c t e r i - z e d  in that the pulling means (10) is mounted on a carrier (11), and in that motive organs (12, 13, 14) are arranged to raise and lower the carrier with the pulling means along a straight line.

2. Device according to claim 1, c h a r a c t e r i z e d  in that the straight line extends from an upper end position, determined by a fixed locking organ (6), said locking organ interacting with the pulling means (10) and locking the eye bar or corresponding element of the trailing unit, down to and past a chosen level, which is preferably no higher than 10 cm above the ground level and suitably no lower than 5 cm above the ground level, enabling said motive organs to lift the rear wheels of the vehicle off the ground by pressing a press plate (11) or some corresponding member down against the ground or down against some other firm support.

3. Device according to claim 2, c h a r a c t e r i z e d  in that the straight line extends from said upper end position slantingly downward-rearward at an angle of between 3 and $20^o$, preferably between 5 and $15^o$, and suitably of about $10^o$ from the vertical plane.

4. Device according to claim 2 or 3, c h a r a c t e r i z e d  in that said press plate constitutes said carrier, that the pulling means extends upward from the top side of the plate, preferably from a point close to the rear edge of the plate, and in that the bottom side of the plate is horizontal irrespective of the position of the plate along its line of displacement and has a comparatively large surface area to distribute the surface pressure, enabling the lifting of the rear wheels from the ground by pressing the plate against the ground or against a firm support.

5. Device according to claim 1, c h a r a c t e r i z e d  in that the motive organs comprise two hydraulic assemblies (12, 13) and that the carrier for the pulling means is mounted between the two hydraulic assemblies, each of which comprising both a hydraulic cylinder (14) and a piston (15) with a piston rod (16), of which parts one first part is permanently affixed to a mounting (2,3,4) on the vehicle, and the other, second part, which is mobile with respect to the first part, is attached to said carrier (11).

6. Device according to claim 5, c h a r a c t e r i z e d  in that said first part, which is permanently affixed to the mounting on the tractive vehicle, is the piston rod (16) and the piston (15), while the cylinder (14), which is mobile with respect to said fixed part, is attached to the carrier for the pulling means.

7. Device according to claim 6, c h a r a c t e r i z e d  in that the piston rod is attached to the mounting by a capped casing (21), which is coaxial with the hydraulic assembly and both functions as a guide for the moving cylinder (14) and as a bracing for the assembly.

8. Device according to claim 5, c h a r a c t e r i z e d  in that the hydraulic assembly is double-acting, and that the piston rod (16) is provided with channels (22,27) for delivering and evacuating hydraulic fluid to and from, respectively, the hydraulic chambers (18,19) on each side of the piston (15).

Fig.1.

0136989

Fig.2.

2/3

Fig.3.

3/3

0136989